# EUROPEAN PATENT APPLICATION

(11) **EP 1 548 265 A1**
(43) Date of publication of application: **29.06.2005**
(21) Application number: 03771306.2
(22) Date of filing: 24.07.2003
(51) Int. Cl.: F02F 5/00, F16J 9/26

(54) **PISTON RING**

(30) Priority: 25.07.2002 JP 2002216840
(71) Applicant: Kabushiki Kaisha Riken, Chiyoda-ku, Tokyo 102-0073 (JP)
(72) Inventor: MURAMATSU, Gyo c/o Kashiwazaki Plant, K.K. Riken, Kashiwazaki-shi, Niigata 945-8555 (JP); INOUE, Shigeo c/o Kashiwazaki Plant, K.K. Riken, Kashiwazaki-shi, Niigata 945-8555 (JP)
(74) Representative: Strehl Schübel-Hopf & Partner
(86) International application number: PCT/JP2003/009390
(87) International publication number: WO 2004/011793

(57) **Abstract**

A piston ring for internal combustion engines has a coating film comprising a heat-resistant material and a solid lubricant dispersed therein on at least one side surface, the heat-resistant material comprising at least one of a polyamideimide-silicon dioxide hybrid material and a polyimide-silicon dioxide hybrid material having high heat resistance and mechanical strength and low hygroscopicity.

## Description

### FIELD OF THE INVENTION

The present invention relates to a piston ring for internal combustion engines having a resin coating with a low friction coefficient.

### BACKGROUND OF THE INVENTION

In internal combustion engines, pistons are put into reciprocating motion by the explosive combustion of fuels in combustion chambers, whereby piston rings repeatedly collide with ring grooves of the pistons. Temperatures in gasoline engines near top rings are elevated to approximately 250°C by the explosive combustion. The near-top-ring temperatures are higher in the case of diesel engines. When a piston made of an aluminum alloy repeatedly collides with piston rings at such high temperatures, fatigue failure occurs on ring groove surfaces of the piston, resulting in the peeling and falling of aluminum fragments. The aluminum fragments and newly exposed aluminum alloy surfaces adhere to side surfaces of the piston rings. This phenomenon is referred to as "aluminum adhesion." As the aluminum adhesion proceeds, the piston rings are fixed onto the ring grooves, thereby losing gas sealability. Thus, a phenomenon called "blow-by" occurs, causing a high-pressure combustion gas to flow from a combustion chamber into a crankcase, thereby reducing the engine output. Further, the piston rings lose an oil-sealing function, thereby increasing oil consumption.

To prevent the fixation of top piston rings onto ring grooves due to aluminum adhesion, a lot of proposals have been made to provide methods for not allowing top piston rings to come into direct contact with aluminum alloy pistons.

Proposed as a measure for a piston is a method disclosed in JP 63-170546 A, in which ring grooves are subjected to an anodization treatment (alumite treatment) with a lubricating material filled in pores of the anodized surface. A hard oxide coating mainly composed of aluminum oxide is formed on the ring grooves by the alumite treatment, thereby preventing the falling of the aluminum fragments and causing no adhesion of aluminum to the piston rings. However, the alumite treatment of the pistons is disadvantageous in high cost.

Proposed as a measure for a piston ring are methods disclosed in JP-UM 60-82552 A and JP 62-233458 A. In the method disclosed in JP-UM 60-82552 A, a heat-resistant, wear-resistant resin coating film composed of a tetrafluoroethylene resin or an oxybenzoyl polyester resin and a solid lubricant such as molybdenum disulfide, graphite, carbon and boron nitride dispersed in the resin is formed on a phosphate coating or a triiron tetroxide coating provided on a side surface of a piston ring. In the method disclosed in JP 62-233458 A, a coating film having a solid lubricant such as molybdenum disulfide dispersed in a heat-resistant resin such as an epoxy resin, a phenol resin, a polyamide resin and a polyimide resin is formed on a side surface of a piston ring. The content of the molybdenum disulfide solid lubricant is desirably 60 to 95% by mass, and a friction coefficient between the ring groove and the side surface of the piston ring is reduced by cleavage of the solid lubricant. Though the solid lubricant decreases the wear of the ring grooves of the piston, the wear cannot completely be prevented because of the softness of the heat-resistant resin used as a coating matrix material. Thus, the piston rings provided by the methods are insufficient in durability though these methods are effective for preventing the aluminum adhesion at the initial stage. Particularly in high-output engines, the resin coating films wear in a relatively short period by high temperatures and collision, bringing the side surfaces of the piston rings into contact with the aluminum alloy ring grooves, thereby causing the aluminum adhesion.

JP 9-184079 A discloses a coating film for improving the durability of a piston ring. This coating film comprises a manganese phosphate underlayer with larger roughness than those of conventional layers, and molybdenum disulfide particles having a particle size of 1 µm to 2 µm, which are dispersed in the manganese phosphate underlayer and mostly accumulated in the recesses of the underlayer, thereby preventing the aluminum adhesion for a long period of time. Despite the improved durability, this coating film is disadvantageous in low effectiveness in preventing the aluminum adhesion because the projections of the manganese phosphate underlayer are in contact with aluminum early.

To prevent the aluminum adhesion, polyamideimide (PAI) has been mainly used as a binder for the conventional coatings. Though the polyamideimide is a resin with excellent heat resistance and softness, it is a polar polymer having high hygroscopicity. Therefore, when coming into contact with moisture generated by the combustion of hydrocarbon-based fuels at high temperatures, the polyamideimide is likely to absorb the moisture. The moisture absorption turns the polyamideimide remarkably poor in mechanical strength, softness, and adhesiveness to the substrate, so that the coating films containing the polyamideimide as a binder are easily broken or peeled off, and worn out when repeatedly collided and slid in engines at high temperatures. The same is true for polyimide (PI). It is thus presumed that the moisture absorption of binders provides the conventional resin coating films with insufficient durability.

Because of the nature as organic polymers, polyamideimide and polyimide are easily oxidized or decomposed at high temperatures. Thus, the polymers are disadvantageously poor in durability in engines with high combustion temperatures, so that they may not be able to be adapted for increased piston ring temperatures because of higher position of top piston rings for higher engine output and stricter exhaust gas regulations.

Recently, much attention has been paid to organic-inorganic hybrid materials, which have advantages of both organic and inorganic compounds. JP 2001-240670 A discloses a polyamideimide-silicon dioxide hybrid material that has improved mechanical strength and heat resistance while maintaining the softness and extensibility of the polyamideimide. This polyamideimide-silicon dioxide hybrid material can be produced by grafting an alkoxysilane onto polyamideimide having a carboxyl group (-COOH) or an acid anhydride group at an end, and by heat-treating the resultant silane-modified polyamideimide resin. It is described in "Polymer Preprint, Japan," Vol. 49, No. 14 (2000) that this polyamideimide-silicon dioxide hybrid material has a moisture absorption coefficient lower than that of polyamideimide per se.

It is described in "Plastics Age," Mar. 2002, 130-132 and "Polymer Preprint, Japan," Vol. 50, No. 11 (2001) that polyimide-silicon dioxide hybrid materials having extremely higher breakage strength and tensile elasticity than those of polyimide per se, which can be produced by grafting methoxysilane onto side chains of a polyamic acid composed of pyromellitic acid and oxadianiline, and heat-treating the resultant silane-modified polyamic acid.

Despite excellent heat resistance and mechanical strength, however, the polyamideimide-silicon dioxide hybrid materials and the polyimide-silicon dioxide hybrid materials are not necessarily satisfactory in aluminum adhesion-preventing effects.

### OBJECT OF THE INVENTION

Accordingly, an object of the present invention is to provide a piston ring having a solid lubricant-dispersed coating film on a side surface thereof, the solid lubricant-dispersed coating film comprising a binder having high heat resistance, high mechanical strength and low hygroscopicity to effectively prevent aluminum adhesion over a long period of time.

### SUMMARY OF THE INVENTION

As a result of intense research in view of the above object, the inventors have found that by replacing polyamideimide or polyimide that has been used as a heat-resistant material in conventional resin coating films, with a heat-resistant material composed of at least one of a polyamideimide-silicon dioxide hybrid material and a polyimide-silicon dioxide hybrid material, it is possible to provide a resin coating film for piston rings with improved heat resistance, mechanical strength and adhesiveness to the piston ring substrate, and with reduced hygroscopicity and wear rate, thereby preventing the adhesion of aluminum to the side surface of the piston ring for a long period of time. The present invention has been completed based on this finding.

Thus, the piston ring for internal combustion engines according to the present invention comprises a coating film comprising a heat-resistant material and a solid lubricant dispersed therein on at least one side surface, the heat-resistant material comprising at least one of a polyamideimide-silicon dioxide hybrid material and a polyimide-silicon dioxide hybrid material.

It is preferable that the solid lubricant comprises an inorganic compound, an inorganic simple substance or a fluororesin and has an average particle size of 0.1 µm to 20 µm. Specifically, the solid lubricant preferably comprises at least one selected from the group consisting of molybdenum disulfide, tungsten disulfide, boron nitride, graphite, polytetrafluoroethylene resins and tetrafluoroethylene-perfluoroalkyl vinyl ether copolymer resins. Further, the content of the solid lubricant in the entire coating film is preferably 5 to 80% by mass.

The piston ring having the above coating may comprise a nitrided layer having a thickness of 3 µm to 120 µm on a surface of a substrate.

### BRIEF DESCRIPTION OF THE DRAWINGS

Fig. 1 is a schematic cross-sectional view showing an adhesion test machine; and
Fig. 2 is a graph showing the number of collision until aluminum adhesion to each resin-coated top ring occurs.

### DETAILED DESCRIPTION OF THE PREFERRED EMBODIMENTS

### [1] Substrate of piston ring

Though not particularly restrictive, the substrate of the piston ring of the present invention is preferably made of a material having excellent durability. Preferred examples of substrate materials include steel, martensitic stainless steel, austenitic stainless steel, high-grade cast iron, titanium alloys, etc. The substrate of the piston ring may be subjected to nitriding, phosphatization, plating, etc., beforehand.

### [2] Resin coating film

The resin coating film of the piston ring contains at least one of a polyamideimide-silicon dioxide hybrid material and a polyimide-silicon dioxide hybrid material as the heat-resistant material, and further contains solid lubricant particles fully dispersed in the heat-resistant material.

### (1) Heat-resistant material

The heat-resistant material comprises a polyamideimide-silicon dioxide hybrid material (hybrid material of polyamideimide and silicon dioxide) and/or a polyimide-silicon dioxide hybrid material (hybrid material of polyimide and silicon dioxide) to compose the resin coating film as a binder. The term "hybrid material" used herein means a so-called organic-inorganic hybrid material, in which an organic material and a metal oxide are coupled or combined. The organic-inorganic hybrid material is not a simple mixture of an organic compound and an inorganic compound, but a composite product homogenized to a molecular level in a synthesis step. Preferable as the hybrid materials are those prepared by heat-treating silane-modified resins and oxidizing silanes into silicon dioxide. The silane-modified resins may be obtained by the reaction of polyamideimide and/or polyimide with a partial condensation product of glycidyl ether group-containing alkoxysilanes. Because the coating film containing the organic-inorganic hybrid material as a heat-resistant material has low hygroscopicity and high heat resistance, mechanical strength, adhesiveness to the substrate and flexibility, it has excellent durability. To obtain the coating film with higher durability, the content of silicon dioxide in the entire hybrid material is preferably 0.2 to 30% by mass. When the content of silicon dioxide is less than 0.2% by mass, the hybrid material is less effective for reducing the hygroscopicity and for increasing the mechanical strength. When the content of silicon dioxide is more than 30% by mass, the coating film is so brittle that it easily peels off by collision.

### (2) Solid lubricant

It is preferable to use inorganic lubricant particles and fluororesin particles alone or in combination as the solid lubricant. Because the inorganic lubricant is cleaved in the sliding operation to reduce the friction coefficient of the coating film, the coating film containing the inorganic lubricant has high wear resistance, thereby being able to prevent the aluminum adhesion for a long period of time. Examples of such inorganic lubricants include inorganic compounds such as molybdenum disulfide, tungsten disulfide and boron nitride, and inorganic simple substances such as graphite.

The fluororesin is less reactive with each other and with other substances, thereby having a low friction coefficient and functions as the solid lubricant. Preferred examples of the fluororesins include straight-chain polymers of tetrafluoroethylene (CF₂=CF₂), such as polytetrafluoroethylene resins (PTFE), tetrafluoroethylene-perfluoroalkyl vinyl ether copolymer resins (PFA), etc. Among the fluororesins, the polytetrafluoroethylene resins (PTFE) particularly have excellent solid lubrication and a low coefficient of friction. The fluororesins have such good ductility that they are easily spread on the sliding surface by collision and sliding. Therefore, the coating films containing the fluororesins have a high wear resistance. In particular, in a case where the coating film has a high fluororesin content, the coating film is entirely covered with a thin film composed of spread fluororesin particles. As a result, the coating film becomes lower in a friction coefficient and higher in durability, thereby maintaining the aluminum adhesion-preventing effect over a longer period of time.

The average particle size of the solid lubricant particles is preferably 0.1 µm to 20 µm, more preferably 0.1 µm to 10 µm. When the average particle size of the solid lubricant particles is less than 0.1 µm, the solid lubricant has poor solid lubrication. When the average particle size is more than 20 µm, the solid lubricant is so easily detached from the coating film that the coating film is worn out relatively rapidly.

### (3) Other additives

A resin hardener, a reinforcing material such as antimony trioxide, etc. may be appropriately added to the resin coating for the piston ring of the present invention.

### [3] Production of piston ring

### (1) Pretreatment

The substrate of the piston ring is preferably subjected to a pretreatment such as a nitriding treatment and a surfactant treatment. In the nitriding treatment, a hard nitrided layer is formed on the surface of the substrate. The nitrided layer improves the wear resistance of the peripheral face of the piston ring, and increases scuff resistance of the piston ring to the sliding mate cylinder made of an aluminum alloy. The nitriding treatment may be gas nitriding, ion nitriding, salt bath nitriding, sulphonitriding, etc. The thickness of the nitrided layer is preferably 3 µm to 120 µm. When the thickness of the nitrided layer is less than 3 µm, the wear resistance of the piston ring is insufficient. When the thickness of the nitrided layer is more than 120 µm, the piston ring is easily broken.

After the nitriding treatment, oils may be removed from the substrate surface by a degreasing treatment using alkali, hydrocarbons, etc. The degreased substrate may be subjected to a pretreatment such as acid cleaning and phosphate treatment, if necessary.

### (2) Preparation of hybrid material

The hybrid material may be prepared by a known method. The silane-modified resins can be preferably prepared by methods described in JP 2001-240670 A, Plastics Age, Mar. 2002, 130-132, Polymer Preprint, Japan, Vol. 50, No. 11 (2001), etc. For example, a partial condensation product of a glycidyl ether group-containing alkoxysilane is prepared by a dealcoholization reaction between a partial condensation product of tetramethoxysilane and a glycide (or glycidol), and then reacted with polyamideimide and/or polyimide having a carboxyl group and/or an acid anhydride group at the end, to obtain a silane-modified polyamideimide resin and/or a silane-modified polyimide resin.

The silane-modified polyamideimide or polyimide may act as a silane coupling agent. Because the silane uniformly exists in the polyamideimide or polyimide molecules in proper quantity, the solid lubricant-dispersed coating can firmly adhere to the piston ring substrate without particular pretreatments.

### (3) Preparation of coating liquid

A solid lubricant-dispersed varnish (coating liquid) may be obtained by mixing the solid lubricant or its dispersion with a varnish of the polyamideimide-silicon dioxide hybrid material and/or the polyimide-silicon dioxide hybrid material in a solvent mainly composed of *N*-methyl-2-pyrrolidinone, etc. The amount of the solid lubricant added is preferably 5 to 80% by mass, more preferably 30 to 70% by mass, based on the weight of the dry coating. When the amount of the solid lubricant is less than 5% by mass, the friction coefficient of the coating film cannot be sufficiently reduced, so that the coating film is easily worn. When the amount of the solid lubricant is more than 80% by mass, the heat-resistant material cannot sufficiently hold the solid lubricant, so that the solid lubricant easily falls off, thereby providing the coating film with poor wear resistance.

### (4) Formation of resin coating film

The coating liquid may be applied to at least one of the upper and lower surface of the piston ring. To more effectively prevent the aluminum adhesion due to collision between the ring grooves and the piston rings, the coating liquid is preferably applied to both side surfaces, more preferably the entire surface, of the piston ring. To improve a resistance to the aluminum adhesion, the coating liquid may be applied to only portions of the piston ring that are subjected to particularly severe wearing. For example, the coating liquid may be applied only to the lower surface of the piston ring, which is rapidly worn by collision generally.

The coating liquid is preferably applied by a known method such as spray coating, dip coating, spin coating, roll coating, electrostatic coating, and printing. The spray coating methods are more preferable from the viewpoints of preventing mottles and improving the efficiency of solvent removal. Further, the printing methods such as screen-printing are more preferable from the viewpoints of high application efficiency and accuracy and low environmental pollution.

The applied coating film may be subjected to a hardening treatment under conditions depending on the heat-resistant materials. In the case of a coating film containing the polyamideimide-silicon dioxide hybrid material as a heat-resistant material, the hardening treatment is preferably carried out at 170°C to 300°C for 30 to 120 minutes. When the hardening temperature is lower than 170°C, the hardening reaction cannot proceed sufficiently, failing to obtain mechanical strength and moisture absorption resistance inherent in the heat-resistant material used. When the hardening temperature is higher than 300°C, the formed coating film is degraded by oxidative decomposition. Further, when the hardening time is less than 30 minutes, the hardening reaction cannot proceed sufficiently, failing to obtain mechanical strength and moisture absorption resistance inherent in the heat-resistant material. When the hardening time is more than 120 minutes, a further hardening reaction does not occur, simply resulting in the waste of time and energy.

The thickness of the resin coating film is preferably 3 µm to 40 µm, more preferably 5 µm to 15 µm. When the thickness of the resin coating film is less than 3 µm, the coating has insufficient wear resistance. When the thickness of the resin coating film is more than 40 µm, it is difficult to fit the piston ring into the ring groove.

As described above, the piston ring effectively preventing aluminum adhesion can be obtained by using at least one heat-resistant resin selected form the polyamideimide-silicon dioxide hybrid material and the polyimide-silicon dioxide hybrid material as a binder, and by forming a coating film containing a solid lubricant dispersed in the heat-resistant resin on at least one side surface of the piston ring.

The present invention will be explained in more detail referring to Examples below without intention of restricting the present invention thereto.

### Example 1

### (1) Pretreatment

Surfaces of a top ring substrate made of martensitic stainless steel was nitrided by a gas nitriding method, and degreased by a commercially available alkaline degreasing liquid. The nitrided substrate was then washed with water and sufficiently dried.

### (2) Preparation of coating liquid

Molybdenum disulfide particles having an average particle size of 5 µm and graphite particles having an average particle size of 4 µm as solid lubricants were added to Compoceran H901 available from Arakawa Chemical Industries, Ltd. in amounts of 30% and 10% by mass, respectively, on a solid basis, and sufficiently stirred to prepare a coating liquid containing uniformly dispersed solid lubricants. Compoceran H901 was a varnish of a silane-modified polyamideimide resin as a heat-resistant material in a mixed solvent of *N*-methyl-2-pyrrolidone and xylene (mass ratio = 80:20), the total concentration of polyamideimide and silicon dioxide being 30% by mass. The coating liquid was diluted with a mixture of *N*-methyl-2-pyrrolidone and xylene, and stirred to prepare a spray coating liquid.

### (3) Formation of resin coating film

The coating liquid was sprayed to one side surface of a pretreated top ring substrate and hardened at 250°C for 1 hour, to form a resin coating film comprising the polyamideimide-silicon dioxide hybrid material and the solid lubricants dispersed therein. The composition and thickness of the hardened coating film are shown in Table 1.

### Example 2

Using a varnish (Compoceran H800 available from Arakawa Chemical Industries, Ltd.) of a silane-modified polyimide resin in a mixed solvent of *N*-methyl-2-pyrrolidone and xylene (mass ratio = 80:20), the total concentration of polyimide and silicon dioxide being 18% by mass, a coating liquid was applied to one side surface of a top ring substrate and hardened in the same manner as in Example 1 except for changing the hardening temperature to 300°C, to form a resin coating film comprising a polyimide-silicon dioxide hybrid material and solid lubricants dispersed therein. The composition and thickness of the hardened coating film are shown in Table 1.

### Example 3

Using a varnish containing the silane-modified polyamideimide resin in Example 1 and the silane-modified polyimide resin in Example 2 in a mixed solvent of *N*-methyl-2-pyrrolidone and xylene (mass ratio = 80:20), at a mass ratio of the polyamideimide-silicon dioxide hybrid material to the polyimide-silicon dioxide hybrid material of 1:1 after the hardening treatment, a coating liquid was applied to one side surface of a top ring substrate and hardened in the same manner as in Example 1 except for changing the hardening temperature to 300°C, to form a resin coating film comprising the polyamideimide-silicon dioxide hybrid material, the polyimide-silicon dioxide hybrid material, and solid lubricants dispersed in the hybrid materials. The composition and thickness of the hardened coating film are shown in Table 1.

### Comparative Example 1

### (1) Pretreatment

Surfaces of a top ring substrate made of martensitic stainless steel was nitrided by a gas nitriding method, and degreased by a commercially available alkaline degreasing liquid. The degreased substrate was washed with water, sufficiently dried, and then washed with trichloroethylene.

### (2) Formation of resin coating film

A solid lubricant-dispersed resin liquid (Defric HMB-2 available from Kawamura Kenkyusho) containing a solid lubricant mainly composed of molybdenum disulfide and graphite dispersed in polyamideimide was sprayed to one side surface of a top ring substrate, and hardened at 190°C for 1 hour to form a resin coating film. The composition and thickness of the hardened coating film are shown in Table 1.

### Comparative Example 2

A resin coating film was formed on one side surface of a top ring substrate in the same manner as in Example 1 except for using polyamideimide as a heat-resistant material. The composition and thickness of the hardened coating film are shown in Table 1.

### Comparative Example 3

A resin coating film was formed on one side surface of a top ring substrate in the same manner as in Example 3 except for using polyimide as a heat-resistant material. The composition and thickness of the hardened coating film are shown in Table 1.

### Comparative Example 4

A resin coating film was formed on one side surface of a top ring substrate in the same manner as in Example 1 except for using a mixture of polyamideimide and polyimide (mass ratio = 1:1) as a heat-resistant material, and for changing the hardening temperature to 300°C. The composition and thickness of the hardened coating film are shown in Table 1.

**Table 1**

| No. | Heat-Resistant Material⁽¹⁾ | Content⁽²⁾ of Solid Lubricant (% by mass) | | Thickness of Coating Film (µm) | |
|---|---|---|---|---|---|
| | | MoS₂ | Graphite | *A*⁽³⁾ | *B*⁽⁴⁾ |
| Example 1 | PAI-SiO₂ (2%) | 30 | 10 | 10 | 9 |
| Example 2 | PI-SiO₂ (8%) | 30 | 10 | 10 | 10 |
| Example 3 | [PAI-SiO₂ + PI-SiO₂] (5%) (Mass ratio = 1:1) | 30 | 10 | 11 | 10 |
| Comparative Example 1 | PAI | NA | NA | 10 | 8 |
| Comparative Example 2 | PAI | 30 | 10 | 9 | 9 |
| Comparative Example 3 | PI | 30 | 10 | 9 | 10 |
| Comparative Example 4 | PAI + PI (Mass ratio = 1:1) | 30 | 10 | 10 | 10 |

| | | | | | |
|---|---|---|---|---|---|
| Note: (1) The number in the parentheses represents the content (% by mass) of SiO₂ based on the heat-resistant material. | | | | | |
| (2) Percentage (% by mass) based on the resin coating film (100% by mass). | | | | | |
| (3) Coating A was tested with respect to aluminum adhesion immediately after the film forming. | | | | | |
| (4) Coating B was tested with respect to aluminum adhesion after the moisture absorption test. (5) Data is not available. | | | | | |

The resin coating films of Examples 1-3 and Comparative Examples 1-4 were subjected to the following tests.

### [A] Moisture absorption test

Each top ring used in Examples 1 to 3 and Comparative Examples 1 to 4 was stored in a thermostatic chamber at 25°C in a relative humidity of 30% for 24 hours before the formation of a coating film, and weighed by an electronic balance to obtain a weight m₁. After the formation of a coating film, each top ring was stored in a thermostatic chamber at 25°C in a relative humidity of 30% for 24 hours, and weighed by an electronic balance to obtain a weight m₂. Each coated top ring was further stored in a thermostatic chamber at 50°C in a relative humidity of 90% for 24 hours, and weighed by an electronic balance to obtain a weight m₃. A moisture absorption coefficient *a* of each resin coating film was calculated by the following equation: *a* = 100 × (m₃ - m₂) / (m₂ - m₁).

The moisture absorption test results of the top rings in Examples 1 to 3 and Comparative Examples 1 to 4 are shown in Table 2. The coating films containing the polyamideimide-silicon dioxide hybrid material and/or the polyimide-silicon dioxide hybrid material as a binder were clearly lower in a moisture absorption coefficient than those containing polyamideimide and/or polyimide as a binder.

**Table 2**

| Top Ring | Moisture Absorption Coefficient (%) |
|---|---|
| Example 1 | 0.83 |
| Example 2 | 0.78 |
| Example 3 | 0.77 |
| Comparative Example 1 | 1.64 |
| Comparative Example 2 | 1.75 |
| Comparative Example 3 | 1.55 |
| Comparative Example 4 | 1.58 |

### [B] Adhesiveness test

Using the same materials as used for coating top rings in Examples 1 to 3 and Comparative Examples 1 to 4, coating films were formed on each flat plate of 30 mm × 30 mm × 1 mm by the same treatment as in Examples 1 to 3 and Comparative Examples 1 to 4. Each coated plate was boiled for 24 hours, sufficiently dried at 100°C, left to stand at room temperature for 24 hours. Thereafter, each coated plate was subjected to a cross-cut tape test to evaluate the adhesiveness of the coating. The adhesiveness test results are shown in Table 3.

**Table 3**

| Coating | Number of Peeled Sections out of 100 Sections |
|---|---|
| Example 1 | 0 |
| Example 2 | 0 |
| Example 3 | 0 |
| Comparative Example 1 | 27 |
| Comparative Example 2 | 15 |
| Comparative Example 3 | 30 |
| Comparative Example 4 | 24 |

### [C] Aluminum adhesion test

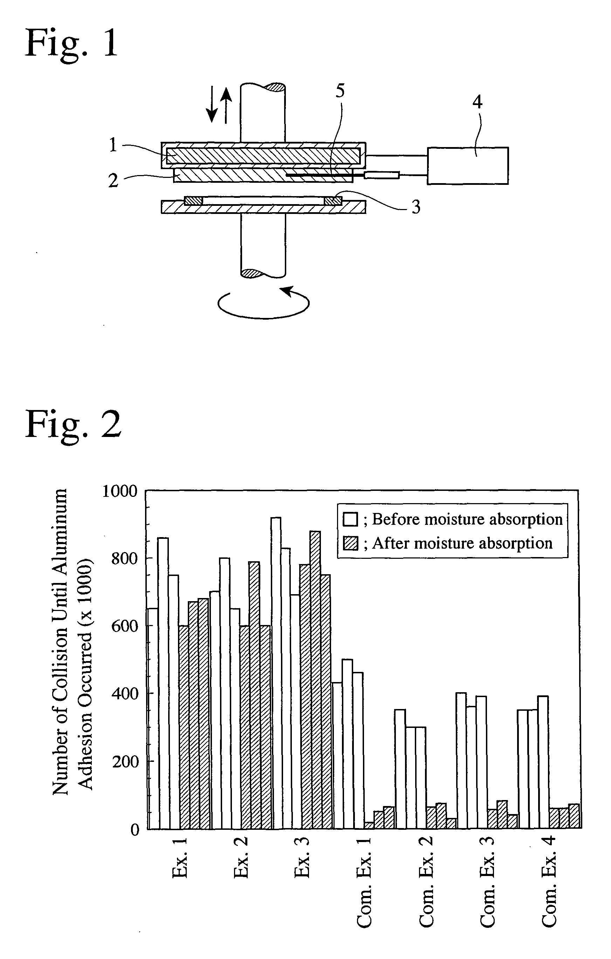

The top rings produced in Examples 1 to 3 and Comparative Examples 1 to 4 were subjected to an aluminum adhesion test using the adhesion test machine shown in Fig. 1. In the aluminum adhesion test, a piston 2 having a thermocouple 5 inserted therein was heated by a heater 1 under the control of a temperature controller 4 and reciprocated up and down, such that a resin-coated side surface of a top ring 3 repeatedly collided with the piston 2, and the top ring 3 was rotated at a constant rate and slid on the piston 2. Incidentally, the piston 2 was made of an aluminum alloy [JIS AC8A (T6)] in a disk shape with a diameter of 100 mm, and the top ring 3 had an outer diameter of 75 mm. The top ring 3 was rotated at a circumferential rotation speed of 3.3 mm/s, and the collision of the top ring 3 to the piston 2 had a pressure of 0.57 MPa and a cycle of 3.3 Hz. No lubricating oil was used.

Fig. 2 shows the number of collision until the aluminum adhesion occurred in each top ring in Examples 1 to 3 and Comparative Examples 1 to 4. As shown in Fig. 2, the top rings of Examples 1 to 3 having the solid lubricant-dispersed coatings containing the PAI-SiO₂ hybrid material, the PI-SiO₂ hybrid material or their combination as a binder were clearly higher in resistance to the aluminum adhesion than those of Comparative Examples 1 to 4 with the coatings containing polyamideimide and/or polyimide as a binder.

In the case of the top rings in Comparative Examples 1 to 4, the number of collision until the aluminum adhesion occurred (aluminum adhesion resistance) was reduced to 1/2 to 2/3 by moisture absorption. On the contrary, in the case of the top rings in Examples 1 to 3, the aluminum adhesion resistance was not substantially reduced by the moisture absorption. It is thus clear that the top rings of Examples 1 to 3 had better water resistance than those of Comparative Examples 1 to 4.

### APPLICABILITY IN INDUSTRY

Formed on at least one side surface of the piston ring of the present invention is a solid lubricant-dispersed coating comprising a polyamideimide-silicon dioxide hybrid material and/or a polyimide-silicon dioxide hybrid material as a binder, which has high mechanical strength, excellent softness and low hygroscopicity. Therefore, the solid lubricant-dispersed coating film of the present invention can more effectively suppress the aluminum adhesion between a ring groove and a top ring than the conventional coating films.

## Claims

1. A piston ring for internal combustion engines comprising a coating film comprising a heat-resistant material and a solid lubricant dispersed therein on at least one side surface, said heat-resistant material comprising at least one of a polyamideimide-silicon dioxide hybrid material and a polyimide-silicon dioxide hybrid material.

2. The piston ring according to claim 1, wherein said solid lubricant comprises an inorganic compound, an inorganic simple substance or a fluororesin, and has an average particle size of 0.1 µm to 20 µm.

3. The piston ring according to claim 2, wherein said solid lubricant comprises at least one selected from the group consisting of molybdenum disulfide, tungsten disulfide, boron nitride, graphite, polytetrafluoroethylene resins and tetrafluoroethylene-perfluoroalkyl vinyl ether copolymer resins.

4. The piston ring according to any one of claims 1 to 3, wherein the content of said solid lubricant in the entire coating is 5 to 80% by mass.

5. The piston ring according to any one of claims 1 to 4, wherein said piston ring comprises a nitrided layer formed on a surface of a substrate thereof, said nitrided layer having a thickness of 3 µm to 120 µm.
